# EUROPEAN PATENT SPECIFICATION

(11) **EP 0 907 491 B1**
(45) Date of publication and mention of the grant of the patent: **12.04.2000**
(21) Application number: 97921816.1
(22) Date of filing: 28.04.1997
(51) Int. Cl.: B29C 47/28, B29C 47/86, B29C 47/02

(54) **PROCESS AND DEVICE FOR DRAWING WITH CALIBRATED EXTRUSION PRECISION TUBULAR LININGS AND TUBES MADE OF RUBBER, PLASTIC AND THE LIKE**
VERFAHREN UND VORRICHTUNG ZUM ZIEHEN MIT KALIBRIERTER EXTRUSIONSPRÄZISION,ROHRFÖRMIGE AUSKLEIDUNGEN UND ROHRE AUS KUNSTSTOFF
PROCEDE ET DISPOSITIF D'ETIRAGE, AVEC UNE PRECISION D'EXTRUSION ETALONNEE, DE GARNITURES TUBULAIRES ET DE TUBES EN CAOUTCHOUC, EN PLASTIQUE ET ANALOGUE

(30) Priority: 03.05.1996 IT TO960351
(43) Date of publication of application: 14.04.1999
(73) Proprietor: Raia, Giuseppe, 10146 Torino (IT)
(72) Inventor: Raia, Giuseppe, 10146 Torino (IT)
(74) Representative: Aprà, Mario
(86) International application number: EP9702192
(87) International publication number: WO9742018

(56) References cited:
- EP-A- 0 287 551
- DE-A- 1 554 776
- DE-U- 9 104 539
- GB-A- 1 174 102
- GB-A- 2 109 740
- US-A- 3 833 325
- US-A- 3 869 235

## Description

The present invention relates to a process for drawing with calibrated extrusion precision tubular linings and tubes made of rubber, plastic and the like.

The invention relates, moreover, to a device for drawing with calibrated extrusion precision tubular linings and tubes made of rubber, plastic and the like, for implementing the aforementioned process.

Tubes and tubular linings made of rubber, plastic and the like are conventionally manufactured by means of two different methods: injection moulding and co-extrusion drawing.

The currently dominant technology is injection moulding, wherein a tube made of rubber, plastic or the like is manufactured by means of moulding in the impressions of a mould.

This technology applied to precision processing operations, for example for filters, has limitations, some of which can be overcome with an increase in costs and others of which cannot be overcome, such as the low quality of the product, for example permanent deformation at 125°C (compression set) - a critical characteristic which is required above all by European filter manufacturers. The aforementioned known technology (examined using methods such as process and product capability and production flow charts) has notable qualitative deficiencies compared to the market requirements.

In the injection-moulding process, the dimensional values with limited tolerances may be observed only by designing moulds of limited length in order to limit the fluctuation to which the male die is subjected. Moreover, the mould is required to have a shape with small dimensions in order to facilitate filling in short periods of time, eliminate long travel paths for the injected material and, therefore, not favour the occurrence of uncontrollable phenomena.

These technological limitations influence negatively, also from a production point of view, the production process.

In order to optimize the cost of the product, dies which are longer and have a greater number of shapes in the mould have been made, with consequent dimensional and technological drawbacks, namely:
- lack of uniformity in vulcanization, both owing to the longer path which the injected material must follow and owing to the difference in temperature existing between the arrangement of the internal shapes and that of the external shapes;
- incomplete vulcanization of the injected material, following the necessary reduction in times so as not to penalize productivity. This notably affects the quality in relation to the compression-set value (deformation 70 H 125 °C);
- increase in the difficulties of automatic control of line assembly, deformation and behaviour of the modulus of elasticity of the material;

In order to overcome partially these drawbacks, a possible solution would be to use mixtures of material to be injected with high-viscosity and high molecular weight polymers; however, the difficulties associated with injection of this material could have an even more negative effect on the production efficiency.

Moreover, co-extrusion drawing is a technology in which the extruded product "memorizes" the variations in pressure and extruder pulsation speed and drawing. This results in a lack of homogeneity of the products obtained, which imposes a dimensional tolerance range beyond which the dimensional quality of the product is not acceptable - in particular, in the case of products intended for automatic precision assembly - , unless a subsequent rectifying operation is performed.

GB-A-2.109.740 discloses a process and apparatus for extruding material around an elongated article comprising feeding molten plastics material, dividing it into a plurality of flows, forcing it through an annular extrusion die and drawing the article including plastic lining through a drawing mouth.

Specifically, the plastics material divided up into several flows is forced to pass through an annular extrusion passage formed between two extrusion die, one inner and the other outer, and, upstream of said extrusion passage in the direction of flow, through an annular inlet, following a substantially smooth extrusion path between facing flat surfaces of the passage and the inlet.

However, the above-mentioned process and apparatus do not assure the flows of plastics material are forced and regulated through the inlet and the extrusion passage between the extrusion dies, so as to convey uniformly the material itself, optimize the pressurized feeding thereof, direct with an axial thrust the progression thereof along the inner surface of the outer die and obtain, in the drawing mouth, the emerging extruded product in tubular form, without the need for the internal male die or the elongated article to be lined.

The present invention, taking as its starting point the notion of the drawbacks mentioned above, proposes to find a solution thereto.

Therefore, the main object of the present invention is that of providing a process and associated device for drawing with calibrated extrusion precision tubular linings and tubes made of rubber, plastic and the like, which are able to satisfy fully the high levels of product quality and production efficiency, such as those required by the market, in a simple, reliable, efficient and economical manner.

In the light of this object, the present invention provides a process and associated device for drawing with calibrated extrusion precision tubular linings and tubes made of rubber, plastic and the like, the essential characteristic features of which form respectively the subject of Claims 1 and 11.

Further advantageous characteristic features are described in the dependent claims.

The present invention will emerge more clearly from the detailed description which follows, with reference to the accompanying exemplary drawings, in which:
- Fig. 1 is a longitudinally sectioned view along the line I-I of Fig. 2, illustrating a device comprising a head for drawing with calibrated extrusion, designed to implement the process for drawing with calibrated extrusion precision tubular linings made of rubber, plastic and the like according to the present invention;
- Fig. 2 is a view in the direction of the arrow II of Fig. 1;
- Figures 3, 4, 5, 6, 7, and 8 are cross-sectional views respectively along the lines III-III, IV-IV, V-V, VI-VI, VII-VII and VIII-VIII in Fig. 1;
- Fig. 9 is a plan view in the direction of the arrow IX of Fig. 10, showing a tube for channelling the flows of material to be drawn with calibrated extrusion through the device according to Fig. 1;
- Fig. 10 is an elevation view in the direction of the arrow X shown in Fig. 9;
- Fig. 11 is a view in the direction of the arrow XI shown in Fig. 10;
- Fig. 12 is a detailed view, on a larger scale and partially sectioned along the line XII-XII of Fig. 11;
- Fig. 13 is a detailed view on a larger scale and partially sectioned along the line XIII-XIII of Fig. 2;
- Fig. 14 is a view similar to that shown in Fig. 1, but which illustrates a tubular core to be lined with rubber through the device and by means of the process according to the invention.

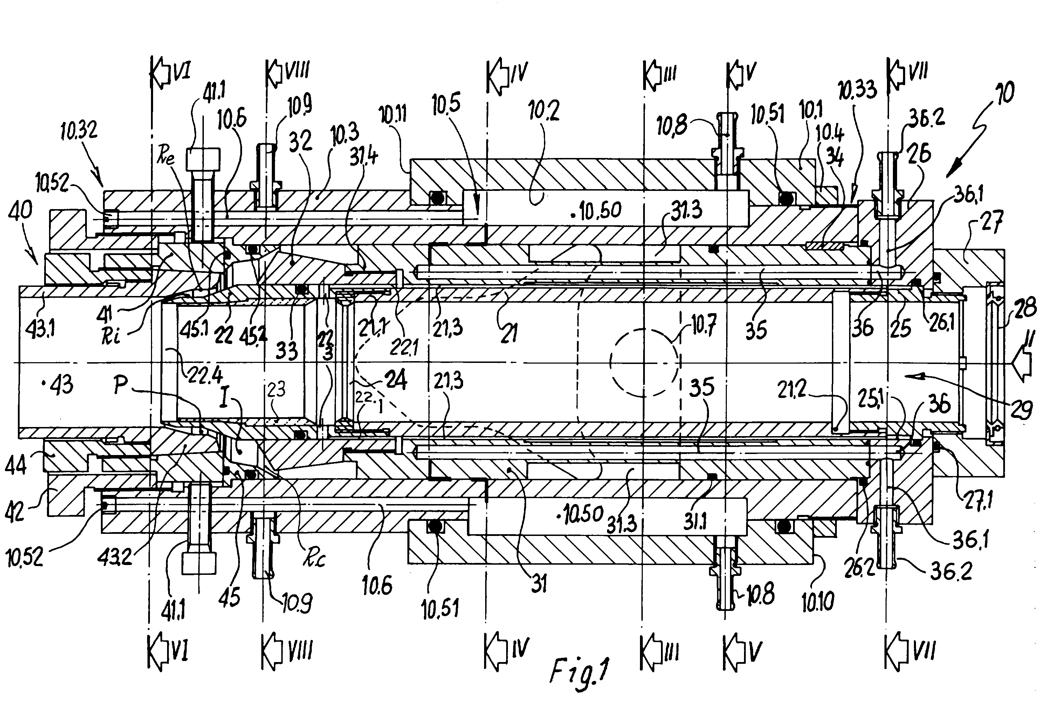

In the drawings, 10 (Fig. 1) denotes in its entirety the device comprising a head for drawing with calibrated extrusion, for implementing the process according to the present invention.

Said device 10 comprises a thermoregulated head with a parallelepiped body 10.1 which has formed in it a cylindrical cavity 10.2 axially opened in two opposite side walls 10.10, 10.11 (Fig. 1).

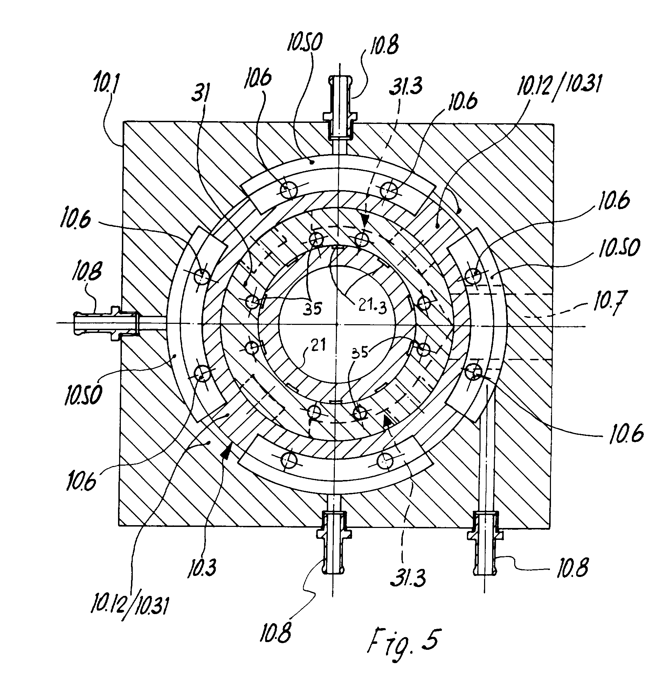

Through said cylindrical cavity 10.2 there axially extends a robust cylindrical tubular body 10.3 for supporting dies for drawing with calibrated extrusion and conveying to said dies liquefied elastomeric material (Figs. 1, 3-6, 8). The axial ends of the tubular support body 10.3 extend beyond said head 10.1.

Said tubular support body 10.3 is fixed with respect to the thermoregulated head 10.1, at one end (wall 10.11), by means of form-fitting and, at the other end (wall 10.10), by means of locking of a ring 10.4 connected with respect to the body itself by means of helical engagement.

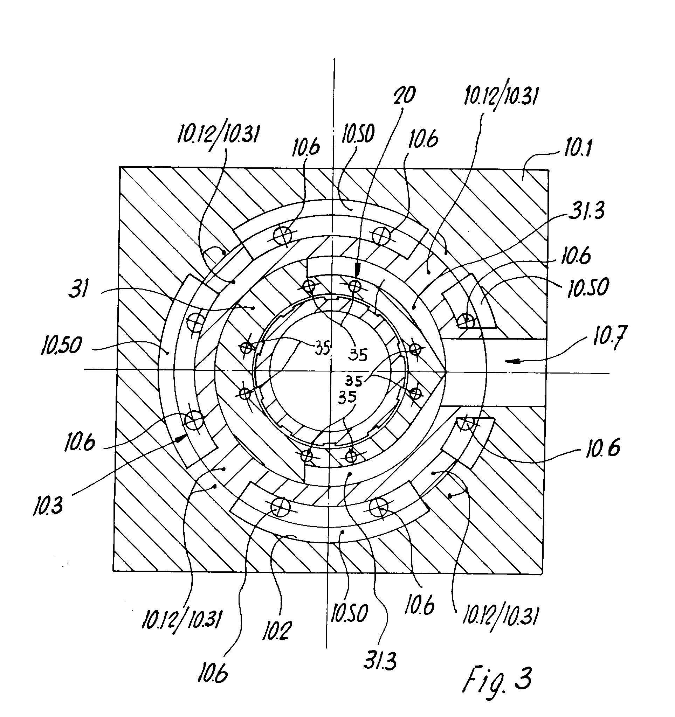

Between the thermoregulated head 10.1 and the tubular support body 10.3 there is provided an annular interspace 10.5 which is divided up into four longitudinal thermoregulating chambers 10.50 by means of respective internal radial segments 10.12 of the head 10.1 and external radial segments 10.31 of the tubular support body 10.3 which are juxtaposed relative to one another in pairs (Figs. 3-5). 10.51 (Fig. 1) denotes annular sealing gaskets arranged between the thermoregulated head 10.1 and said tubular support body 10.3.

Eight hydraulic ducts 10.6 extend in the axial direction through said tubular support body 10.3. At one end and in pairs, they emerge into respective thermoregulating chambers 10.50, while at the other end they open out into an end zone 10.32 of the body itself (referred to below as front end) and are closed off by means of respective sealing plugs 10.52.

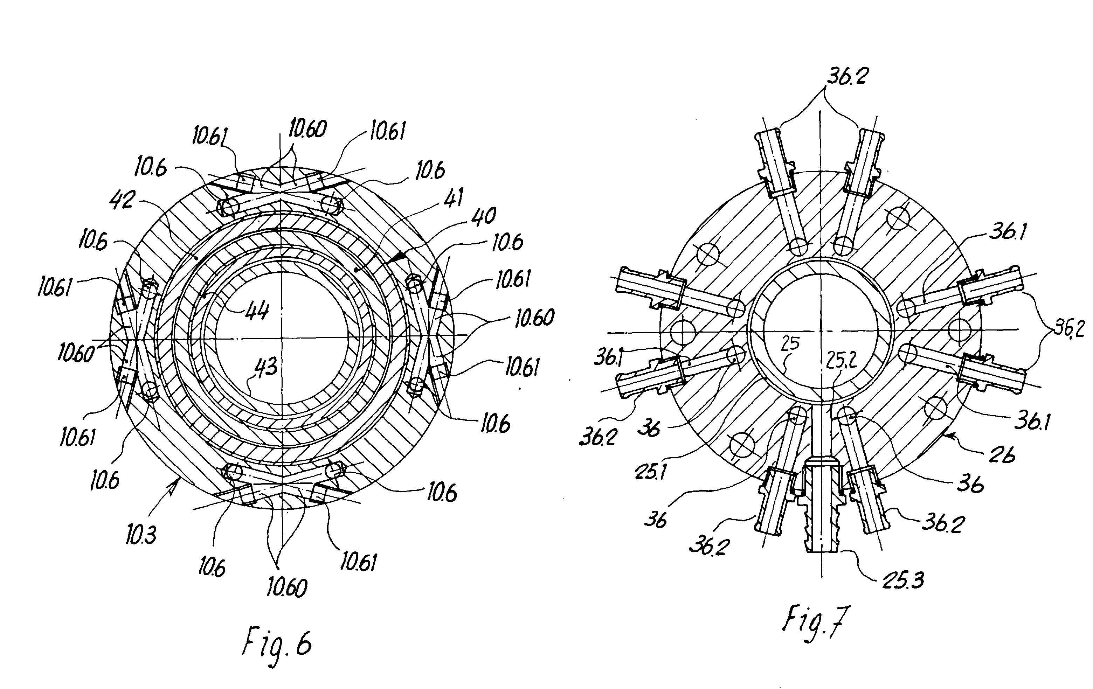

In said front end 10.32 of the tubular support body 10.3, adjacent hydraulic ducts 10.6 are placed in fluid communication with one another in pairs by means of respective pairs of intercommunicating holes 10.60 (Fig. 6) oblique with respect thereto and intersecting and sealingly closed by means of respective plugs 10.61.

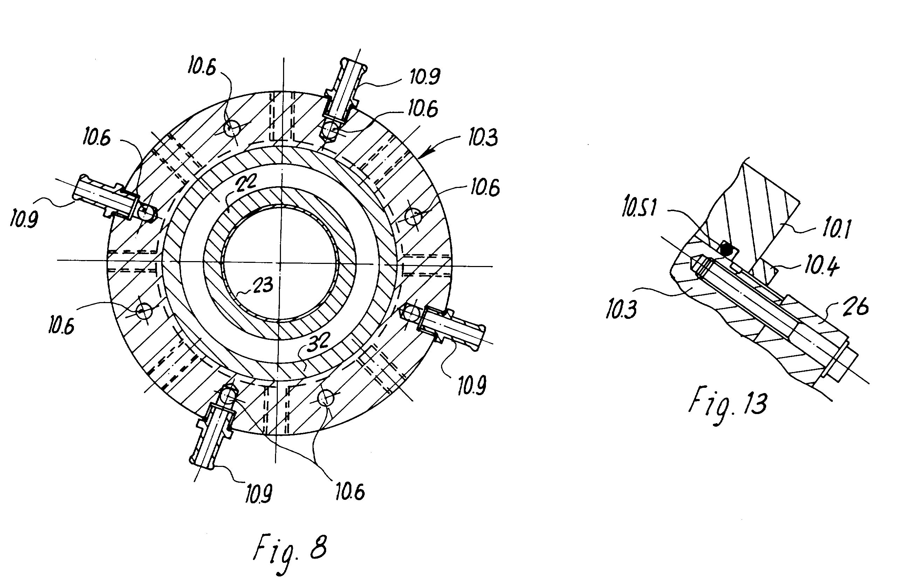

10.8 (Figs. 1, 2, 5) denotes four hydraulic nozzle-type connectors which are fixed to the thermoregulated head 10.1 and each placed in sealed fluid communication with one of said thermoregulating chambers 10.50, while 10.9 denotes four radial hydraulic nozzle-type connectors fixed to said tubular support body 10.3 and placed in sealed fluid communication with as many axial ducts 10.6 (in an alternating manner with respect to the other four ducts 10.6, Figs. 1,8). As will become clearer below, said nozzles 10.9 provide as many inlets for thermoregulating liquid and said nozzles 10.8 as many outlets with respect to the hydraulic thermoregulating circuit of the head 10.1 and the tubular support body 10.3 formed by the ducts 10.6 and the chambers 10.50. Said thermoregulated head 10.1 is mounted on a carriage (not shown) performing an alternating movement and is fixed, by means of suitable rapid-action couplings, with respect to an extrusion mouth (not shown) of an extruder of liquefied elastomeric material, such as rubber, homogenized at about 75°C and at a pressure of about 200-350 bar.

The axis of the cavity 10.2 of the head 10.1 is substantially perpendicular with respect to the axis of said extrusion mouth and said axes are contained in a horizontal plane. The liquefied elastomeric material is conveyed through said thermoregulated head 10.1 and said tubular support body 10.3 by means of a radial duct 10.7 (Figs. 1, 3, 5).

Said tubular support body 10.3 has coaxially mounted inside it a first tubular die-carrying group 20 (Fig. 3). Said die-carrying group 20 extends axially, substantially from the other axial end 10.33 of said tubular support body 10.3., referred to below as rear end (Fig. 1).

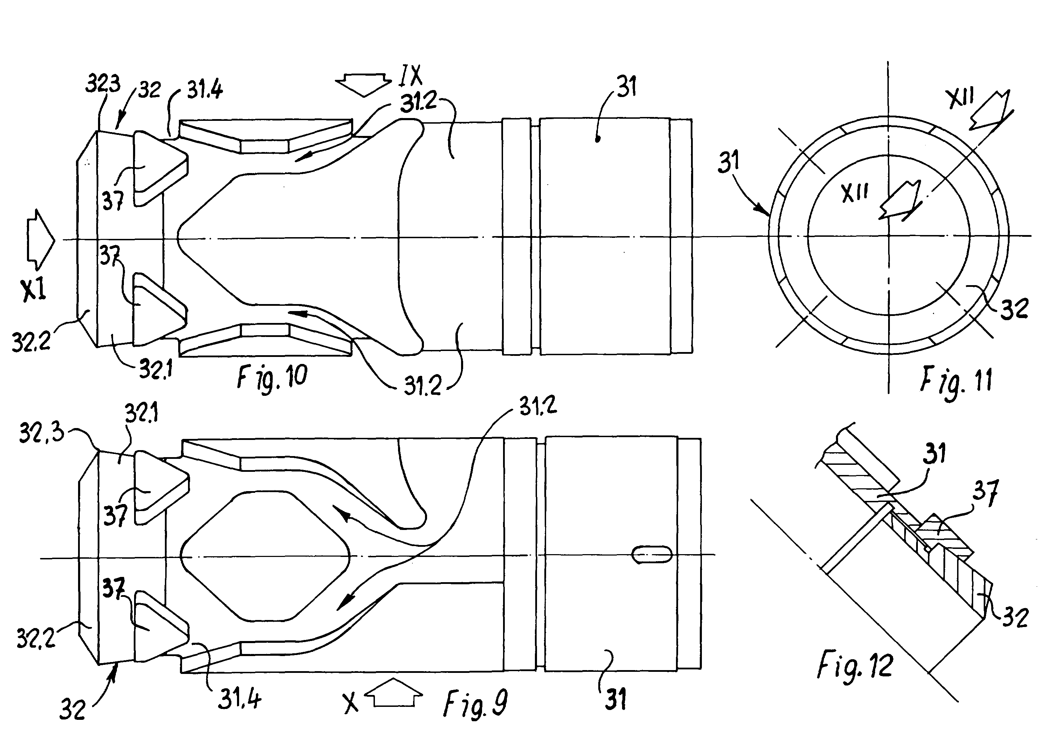

Said internal tubular group 20 comprises:
- an outer tube 31 (Figs. 1, 3-5, 9, 10) which is fixed and sealingly juxtaposed (annular gasket 31.1, Fig. 1) with respect to said tubular support body 10.3. The external cylindrical side surface of said outer tube 31 has a plurality of channels 31.2 (Figs. 9, 10) which with the internal cylindrical side surface of said tubular support body 10.3 form an arrangement of ducts 31.3 for conveying liquefied elastomeric material from said radial duct 10.7 towards said front end 10.32 of said same tubular support body 10.3 (Figs. 1, 3, 4). More precisely, in said arrangement of ducts 31.3 four flows of liquefied elastomeric material are formed by means of a double "Y" bifurcation of the flow incoming via the radial duct 10.7, as will become clearer below; as well as:
- an inner tube 21 (Figs. 1, 3-5) mounted coaxially with play and axially movable inside said outer tube 31.

Said outer tube 31 extends axially from said rear end 10.33 of the tubular support body 10.3 as far as an intermediate zone of the body itself, with respect to which it is prevented from rotating by means of a spline 34 (Fig. 1). The inner tube 21 also extends in the same manner axially inside said outer tube 31.

Said inner tube 21 carries at one of its axial ends 21.1 (Fig. 1), referred to below as front end and close to the front end 10.32 of said tubular support body 10.3, a tubular extrusion die 22 (Figs. 1, 8), referred to below as inner die, having - in its portion adjacent to the tube 21 itself - substantially identical external and internal diameters and coaxially locked by means of helical engagement.

Inside it, said inner die 22 is lined with a cylindrical tubular sleeve 23 made of anti-friction material, for example Teflon (registered name) and arranged coaxially.

Between said front end 21.1 of the tube 21 and said inner die 22 there is arranged a coaxial pneumatically sealing annular gasket 24, the internal diameter of which corresponds substantially to that of said internal tubular sleeve 23 (cf. Fig. 1).

An adjusting ring 25 is coaxially connected, by means of helical engagement, with respect to the other axial end 21.2, referred to below as rear end, of said inner tube 21. Said ring 25 has substantially the same internal and external diameters as the inner tube 21.

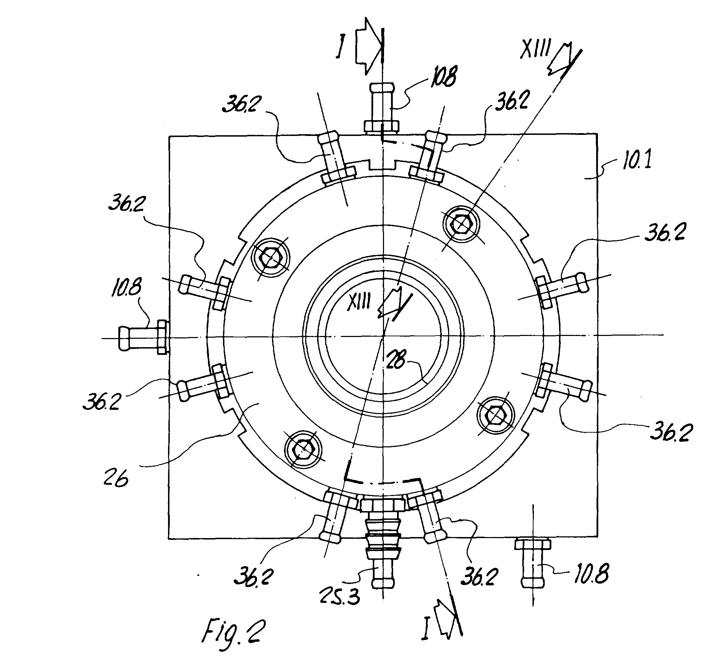

26 (Figs. 1, 7) denotes an intermediate bush, mounted in a pneumatically sealing coaxial manner (annular gaskets 26.1, 26.2, Fig. 1) on the adjusting ring 25 and arranged between said tubular support body 10.3 and said outer tube 31, on the one hand, and an end ring 27 (Figs. 1, 2) coaxially locked in a pneumatically sealed manner (annular gasket 27.1) by means of helical engagement with respect to the free axial end of said adjusting ring 25. 28 denotes a pneumatically sealing annular gasket (corteco) fixed coaxially inside said end ring 27 and having an internal diameter substantially corresponding to that of the annular gasket 24. (This internal diameter corresponds substantially to the external diameter of the cores to be lined, as will become clearer below). Said gasket 28 forms the mouth for introduction of the tubular cores to be lined.

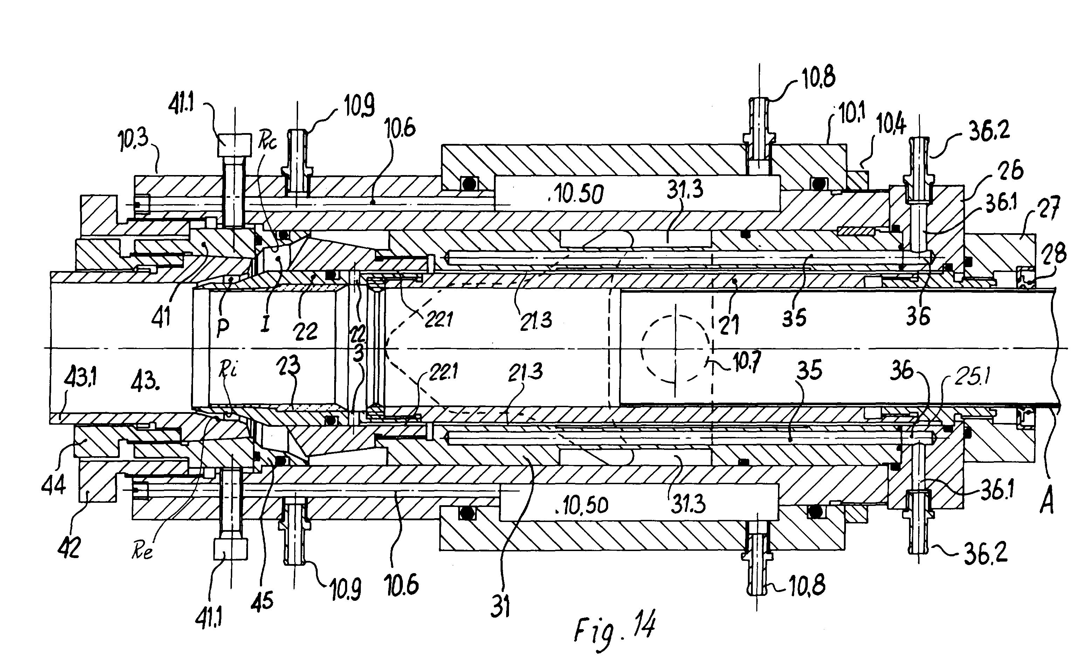

Fig. 13 shows the means for the sealingly diassemblable axial connection of the intermediate bush 26 with respect to the tubular support body 10.3.

By means of this arrangement, said internal group 20 is kept stably in a coaxial position inside the tubular support body 10.3, whereas rotating the adjusting ring 25 in opposite directions causes a corresponding forward or backward axial movement of the inner tube 21 and hence the inner die 22 with respect to the front end 10.32 of the tubular support body 10.3 itself. Moreover, by means of the pneumatically sealing annular gaskets 24, 28, the inner tube 21 and the internal tubular sleeve 23 of the inner die 22, there is formed a calibrated axial passage 29 (Fig. 1) for the tubular cores to be lined, which is axially aligned with respect to said inner die 22, as will become clearer below.

Moreover, a bush 32 (Fig. 1) is fixed coaxially, by means of helical engagement, to one axial end 31.4, referred to below as front end, of said outer tube 31, so as to be partially superimposed, externally and coaxially, with respect to said inner die 22, covering substantially the portion thereof adjacent to said front end 21.1 of the inner tube 21. It will be noted that said bush 32 is provided, by way of an axial extension of the outer tube 31, with an external radial projection of dual conicity (Figs. 1, 9, 10), namely having a first section 32.1 in the form of a ramp conically flared from said tube 31 towards said front end 10.32 of the tubular support body 10.3 and a following section 32.2 in the form of a ramp conically tapered towards said end 10.32 and connected with respect to the external surface of said inner die 22. The zone 32.3 of maximum external diameter of said bush 32 is, however, radially spaced with respect to the internal side surface of said tubular support body 10.3.

A resilient pneumatic-sealing ring 33 (O-ring) is arranged between said bush 32 and said inner die 22.

Said inner tube 21 has, on its external side surface, a circumferential arrangement of grooves 21.3 (Figs. 1, 3) extending in the axial direction and extended into corresponding axial grooves 22.1 provided on an adjacent zone of the external side surface of the inner die 22 covered by the bush 32. Said axial grooves 21.3, 22.1 form together with the internal side surfaces of the outer tube 31 and the bush 32 respective pneumatic ducts which are placed in pneumatic communication - at one end and via an external annular pneumatic chamber and radial pneumatic passages 22.3 provided in said inner die 22 (Fig. 1) - with the internal volume of the inner die 22 itself.

It will be noted that the inner side surface of said tubular sleeve 23, which internally lines the inner die 22, is also provided with grooves extending in the axial direction.

Moreover, between the adjusting ring 25 and the intermediate bush 26 there is provided a pneumatically sealed annular chamber 25.1 (Figs. 1, 7), which, via a pneumatic duct 25.2, is placed in pneumatically sealed fluid communication with a radial nozzle-type pneumatic suction connector 25.3 sealingly fixed with respect to said bush 26. Inside said pneumatic chamber 25.1 there emerge, at the other end, said pneumatic ducts formed between the grooves 21.3 of the inner tube 21 and outer tube 31.

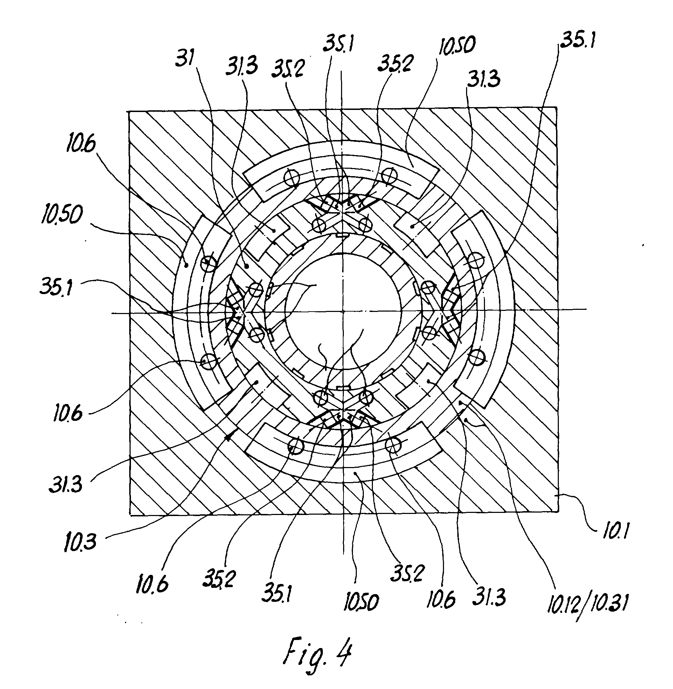

Moreover, said outer tube 31 is provided internally with eight hydraulic ducts 35 (Figs. 1, 3, 5) which extend in a radial direction and which are arranged in pairs in fluid communication with one another, in the vicinity of the front end 31.4 of the tube itself, by means of respective pairs of intercommunicating holes 35.1 (Fig. 4) with oblique and intersecting axes and sealingly closed by means of respective plugs 35.2.

Said hydraulic ducts 35 are extended into respective blind axial holes 36 (figs. 1, 7), provided in the bush 26 and communicating in a fluid-tight manner, by means of corresponding radial ducts 36.1, with associated nozzle-type radial connectors 36.2 fixed to the bush itself. For each pair of intercommunicating hydraulic ducts 36, a nozzle-type connector 36.2 is hydraulically connected in a sealed manner, via tubular means not shown, with respect to a corresponding connector 10.8 of the thermoregulated head 10.1, while the other nozzle-type connector 36.2 has an hydraulic outlet.

40 (Figs. 1 and 6) denotes another tubular die-carrying group which is mounted coaxially inside said tubular support body 10.3 via its front end 10.32.

Said other die-carrying group 40 comprises a short die-carrying tube 41 mounted coaxially and radially adjustable with respect to said front end 10.32 of the tubular support body 10.3 by means of an arrangement of eight radial pressure screws 41.1 circumferentially offset with respect to one another by about 45° each.

Said die-carrying tube 41 is axially fixed with respect to said tubular support body 10.3 by means of a ring 42 engaged by means of helical coupling with respect to said front end 10.32 of the tubular support body 10.3 itself.

Said die-carrying tube 41 carries inside it and coaxially a tubular extrusion die 43, referred to below as outer die, which is axially fixed by means of form-fitting in a conical seat and a ring 44 engaged by means of helical coupling with respect to said same tube 41.

Said outer die 43 extends with one of its cylindrical tubular axial ends 43.1, referred to as front end, outside of said tubular support body 10.3. Starting from said front end 43.1 thereof, the outer die 43 has a cylindrical inner side surface extending into the vicinity of its other axial end 43.2, referred to as rear end, where its inner side surface is flared in the manner of a funnel open towards the rear end 10.33 of the tubular support body 10.3 by means of a plurality of successive conical and/or cylindrical ramps Re, having different conicities and/or different internal diameters.

Inside said rear end 43.2 of the outer die 43, the free axial end 22.4 of the inner die 22 extends coaxially without contact. Said free end 22.4 of the inner die 22 on the outside is tapered towards the front end of the tubular support body 10.3 by means of a plurality of successive conical and/or cylindrical ramps Ri, having different conicities and/or different external diameters. Thus, between the two extrusion dies, i.e. the inner one 22 and outer one 43, there is formed an annular passage P for calibrated extrusion having an axial cross-section (Fig. 1), which is discontinuously varied and smaller towards the front end (or calibrated-extrusion drawing mouth) 43.1 of the outer die 43, with a cylindrical progression.

It should be noted that the internal diameter of said drawing mouth 43.1 is greater than the internal diameter of the axial passage 29 by an amount substantially corresponding to the thickness of the wall of the precision tubular lining extruded through the dies 22 and 43.

Moreover, a conveying ferrule 45 is mounted coaxially in said tubular support body 10.3, between said die-carrying tube 41 and a facing circumferential shoulder of the tubular support body 10.3 and extends substantially as far as the zone of maximum external diameter 32.3 of the fixed bush 32.

The inner side surface of said conveying ferrule 45 is conically flared in the manner of a funnel open towards the rear end 10.33 of the tubular support body 10.3 by means of a plurality of successive conical ramps Rc of varying conicity. In this way, an annular inlet I is formed between said bush 32 and the adjacent part of the inner die 22, on the one hand, and said conveying bush 45, on the other hand, said inlet emerging towards said extrusion passage P and having an axial cross-section (Fig. 1) which is discontinuously varied and substantially smaller at its entry point, i.e. in the region of the zone 32.3 of maximum external diameter of the bush 32.

Moreover, as illustrated in Figures 9 and 10, at the outlet of each of the four branched channels 31.2 on the external surface of the outer tube 31 and between the front end 31.4 of the tube itself and the conically flared ramp 32.1 of the bush 32 there is provided a respective prismatic block 37 for distributing the flow of liquefied elastomeric material conveyed from the radial duct 10.7. Said blocks 37 are force-fitted in a disassemblable manner with respect to the bush 32, resting against the outer tube 31 (cf. Fig. 12), so as to be able to be replaced with others of different thickness and/or shape.

Axially sealing annular gaskets 45.1 and radially sealing annular gaskets 45.2 (Fig. 1) are respectively arranged between said die-carrying tube 41 and said conveying ferrule 45 and between said bush 45 and the tubular support body 10.3.

### Operation:

The liquefied and homogenized elastomeric material is forced under pressure from the extruder into the conveying duct 10.7 of the device 10, divided up into four flows along the conveying ducts 31.3 between the outer tube 31 and support body 10.3 and reaches the distribution blocks 37 which divide it up further into eight separate and circumferentially distributed flows.

Said flows travel along the conically flared ramp 32.1 of the bush 32 and penetrate, through the small-size entrance into the annular inlet I where they merge, following a varied path between several facing ramps (Re/32.2) tapered and converging in the axial direction towards the annular extrusion passage P. The liquefied and homogenized material then passes through said annular extrusion passage P, between the inner extrusion die 22 and outer extrusion die 43 and is extruded continuously in tubular form, following a varied extrusion path between several facing ramps (Re/Ri) which are tapered and converging in the axial direction towards the drawing mouth 43.1 and the shape and arrangement of which are designed according to the viscosity and the hardness of the elastomeric material. Said ramps cause orientation of the flow of material against and around the wall of the outer die and the drawing mouth.

At the same time, a tubular core A (Fig. 14) having an external diameter corresponding to the internal diameter of the calibrated axial passage 29 is fed forwards automatically in the axial direction along the passage itself, from the insertion mouth 28 towards the drawing mouth 43.1. This forward feeding movement of the core A to a point beyond the free end 22.4 of the inner die 22 is obtained owing to the action of the vacuum prevailing in said passage 29, which is created by means of continuous pneumatic suction through the pneumatic nozzle 25.3, the pneumatic duct 25.2, the pneumatic chamber 25.1 and the axial grooves 21.3 and 22.1 of the inner tube 21 and inner die 22 and the pneumatic passages 22.3 of said inner die 22, as well as in the region of the grooves of the sleeve 23 lining the die 22 itself.

The elastomeric material, extruded under pressure in calibrated tubular form through the dies 22 and 43, imitates with its own movement the inner side surface of the drawing mouth 43.1, along which the extruded material flows with continuity, completely enveloping and drawing in the axial direction through and beyond the mouth 43.1 the tubular core A, to which the extruded tubular product closely adheres.

Other tubular cores A are fed, in a non-continuous manner, through the calibrated passage 29 of the device 10.

The process according to the invention for drawing with calibrated extrusion a rubber lining on tubular cores is thus performed continuously.

During execution of the process, the temperature of the liquefied elastomeric material is continuously controlled and regulated inside the device 10 by means of the circulation of a thermoregulated liquid in the dual hydraulic circuit formed, in the external part of the device, by the thermoregulating chambers 10.50 of the head 10.1 and by the hydraulic ducts 10.6 of the tubular support body 10.3, in liquid communication with said chambers, and in the internal part of the device 10, by the hydraulic ducts 35 of the outer tube 31, also in liquid communication with said thermoregulating chambers 10.50. In said dual hydraulic circuit there are provided four independent hydraulic lines for the circulation of thermoregulated liquid, each comprising a pair of hydraulic ducts 10.6, a corresponding thermoregulating chamber 10.50 and an associated pair of hydraulic ducts 35-36.

As a result of a suitable arrangement of temperature probes (not shown) in the device 10, along the path of the liquefied elastomeric material, it is possible to perform control and regulation, in a continuous manner, of the temperature of the material so as to maintain optimum conditions for drawing with calibrated extrusion of the material itself, by means of continuous thermoregulation of the liquid circulating in each hydraulic line of said dual hydraulic circuit, independently of the thermoregulation of the liquid circulating in the other hydraulic lines. By means of this process, an extruded precision lining is continuously produced.

As is clear from above, in the device 10 according to the invention the flows of elastomeric material are forced and regulated through the inlet I and the extrusion passage P between the extrusion dies 22 and 43, following a varied extrusion path between several facing ramps which are tapered and converging in the axial direction towards the drawing mouth, so as to convey uniformly the material itself, optimize the pressurised feeding thereof, direct with an axial thrust the progression thereof along the inner surface of the outer die and obtain, in the drawing mouth, the emerging extruded product in tubular form, without the need for the internal male die.

This permits the formation of an extruded tubular product which is compact and calibrated and which, in the drawing mouth, uniformly lines the core, adhering thereto and drawing it in an additional forward feeding movement caused by the axial thrust of the material which is present between the calibrating dies.

In the drawing operation thus performed, forward feeding of the core to be lined is obtained by means of pneumatic suction and is directly related to the speed of extrusion of the tubular lining adhering to it.

Since feeding of the cores is not obtained by means of drawing or pulling, any phenomena relating to pulsation or variation in pressure and/or drawing speed which could be "memorized" by the finished product are avoided.

Moreover, it is ensured that there is perfect adhesion of the lining on the core, so as to obtain a tubular lining of high linear precision, which cannot be achieved instead with the known co-extrusion process.

Moreover, continuous control of the temperature of the liquefied elastomeric material, which is extruded through the device 10, allows the dimensional errors in the thickness of the tubular wall of the extruded product to be drastically reduced.

In fact, conventionally, it is attempted to find a remedy for the errors in thickness of the tubular wall of the extruded product by means of mechanical adjustment of the coaxial alignment of the inner and outer dies. This adjustment, however, requires a high degree of precision and is made difficult by the forces which it involves.

By means of the process and device according to the invention, however, it is possible to overcome the aforementioned drawback by combining two different methods for controlling the process conditions, namely:
- first of all, by means of mechanical macro-adjustment - for example prior to execution of the process - of the coaxiality and relative interpenetration of the extrusion dies, performed by means of the pressure screws 41.1 and the adjusting ring 25; moreover,
- by means of a continuous thermal micro-adjustment, during execution of the process, relating to the viscosity characteristics of each mixture flow and performed by means of the dual liquid thermoregulating circuit 10.6, 10.50, 35, so as to ensure uniformity of the flow speeds of the various flows of material with an optimum and common extrusion speed for each longitudinal segment of the wall of the extruded tubular product.

It will be noted that, as already mentioned, each thermoregulating chamber 10.50 with associated pairs of hydraulic inlet ducts 10.6 and outlet ducts 35 has circulating inside it a flow of thermoregulated liquid independent of the flows of thermoregulated liquid which circulate in the other thermoregulating chambers 10.50 and associated ducts and that the temperature of the thermoregulating liquid flowing therein is continuously controlled only depending on the detected temperature of the flow of mixture occurring in the chamber itself and the associated hydraulic ducts.

Although the exemplary description provided above relates to the production of a precision tubular lining made of rubber, plastic or the like, nevertheless, by means of the process and the device for drawing with calibrated extrusion according to the invention, it is possible to produce also precision tubes made of rubber, plastic or the like.

For this purpose, in fact, it is sufficient to provide in the device 10, in place of the inner die 22, another inner die which is substantially similar, but the free axial end of which is extended, coaxially, as far as the corresponding free axial end 43.1 of the outer die 43. Obviously, in this case, no tubular core is fed by means of pneumatic suction in the calibrated axial passage 29.

## Claims

1. Process for drawing with calibrated extrusion precision tubular linings and tubes made of rubber, plastic and the like, wherein the liquid and homogenized polymeric material is fed continuously and under pressure into a device for drawing with calibrated extrusion (10), is divided up into a plurality of flows, is forced to pass through an annular extrusion passage (P) formed between two extrusion dies (22, 43), one inner and the other outer, is extruded through said passage (P) in a calibrated tubular form, and is then drawn through a following tubular drawing mouth (43.1), imitating the shape of the inner surface thereof and emerging by means of its movement, characterized in that the liquid and homogenized polymeric material is extruded following, through said extrusion passage (P), a varied and substantially axial extrusion path between several facing ramps (Re/Ri) which are tapered and/or converging in an axial direction towards said drawing mouth (43.1) so as to convey uniformly the material itself, optimize the pressurized feeding thereof, direct with an axial thrust its progression along the inner surface of the outer die in said extrusion passage (P) and obtain, in the drawing mouth (43.1), an extruded product in tubular form emerging under its own movement and without the need for an internal male die.

2. Process according to Claim 1, wherein the liquid and homogenized polymeric material divided up into several flows is forced to pass - upstream of said extrusion passage (P) in the direction of flow - through an annular inlet (I), characterized in that said flows of liquid and homogenized polymeric material travel - upstream of said inlet (I) in the direction of flow - along a conically flared ramp (32.1), penetrate, through an annular entrance of small dimensions, into said annual inlet (I) where they then follow a substantially axial and varied path between facing ramps (Rc/32.2) which are tapered and/or converging in the axial direction towards said annular extrusion passage (P).

3. Process for drawing with calibrated extrusion precision tubular linings and tubes made of rubber, plastic and the like according to Claim 1 or 2, wherein tubular cores (A) to be lined are fed, for example continuously, into said device (10) through a feeding passage (29) in which each core is guided and automatically fed forwards, from an insertion mouth (28) towards said drawing mouth (43.1), at least as far as said extrusion passage (P) and wherein the polymeric material extruded under pressure in calibrated tubular form through said extrusion passage (P) - while it imitates, emerging under its own movement, the inner side surface of the drawing mouth (43.1) - uniformly envelopes and draws, through and beyond said drawing mouth (43.1), each tubular core (A) to which the tubular extruded product itself closely adheres, characterized in that feeding of each core to be lined (A), at least as far as said extrusion passage (P), is performed owing to the action of a vacuum prevailing in said feeding passage (29) and, subsequently, is directly related to the speed of extrusion of the tubular lining which adheres to it.

4. Device for drawing with calibrated extrusion precision tubular linings and tubes made of rubber, plastic and the like, for implementing the process according to Claim 1, comprising a head (10.1) which is mounted on a carriage performing an alternating movement and which is, for example, fixed by means of rapid-action couplings with respect to an extruder of liquid and homogenized polymeric material, a tubular support body (10.3) fixed in said head (10.1) and carrying, housed inside it, a first tubular die-carrying group (20) which is fixed and extends over part of the length of said support body (10.3), substantially from one of its ends (10.33), and another tubular die-carrying group (40) which is fixed and extends over part of the length of said support body (10.3), substantially from the other of its ends (10.32), in which said first tubular die-carrying group (20) comprises an outer tube (31) which is fixed and juxtaposed sealingly in said tubular support body (10.3), and an inner tube (21) mounted in said outer tube (31), in which between said outer tube (31) and said tubular support body (10.3) there is provided an arrangement of ducts (31.3) through which the liquefied polymeric material, fed continuously and under pressure from an insertion duct (10.7), is divided up into a plurality of flows towards said other end (10.32) of said tubular support body (10.3), in which said inner tube (21) carries, at its end (21.1) close to said other end (10.32) of said tubular support body (10.3), a tubular extrusion die (22), referred to below as inner die, forming an extension of said same inner tube (21), in which said other die-carrying group (40) carries another tubular extrusion die (43), referred to below as outer die, which extends with one of its tubular end zone (43.1) at least as far as said other end (10.32) of said tubular support body (10.3), forming a tubular drawing mouth, characterized in that the other end zone (43.2) of said outer die (43) has an inner side surface flared in the manner of a funnel open towards said end (10.33) of said support body (10.3) by means of a plurality of successive ramps (Re) which are conical and/or cylindrical and have different conicities and/or different internal diameters, and in that inside said flared end (43.2) of said outer die (43) there extends without contact the free end (22.4) of said inner die (22) which on the outside is tapered towards said other end (10.32) of said tubular support body (10.3) by means of a plurality of successive ramps (Ri) which are conical and/or cylindrical and have different conicities and/or different external diameters so that, between said two extrusion dies (22, 43), there is provided an annular passage (P) for calibrated extrusion, which has an axial cross-section (Fig. 1) discontinuously varied and smaller towards said drawing mouth (43.1) and through which the polymeric material is forced to pass and is extruded in calibrated tubular form, following a varied extrusion path between facing ramps (Re/Ri), the shape and arrangement of which are designed according to the viscosity and hardness of the polymeric material, which is then drawn through the following tubular drawing mouth (43.1), imitating the shape of the inner surface thereof and emerging under its own movement.

5. Device according to Claim 4, for implementing the process according to Claim 2, comprising a conveying ferrule (45) which is fixed in said tubular support body (10.3) upstream - in the direction of flow of the liquefied polymeric material - of said outer die (42) and which externally envelops, without contact and at least partially, said inner die (22), characterized in that the inner side surface of said conveying ferrule (45) is conically flared in the manner of a funnel open towards said end (10.33) of the tubular support body (10.3) by means of a plurality of successive ramps (Rc) which are conical and/or cylindrical and which have different conicities and/or different internal diameters, such that between said conveying ferrule (45) and the adjacent part of said inner die (22) there is formed an annular inlet (I) emerging - in said direction of flow - towards said extrusion passage (P) and having an axial cross-section (Fig. 1) which is discontinuously varied, such that the liquid and homogenized polymeric material divided up into several flows is forced to pass - upstream of said extrusion passage (P), in the direction of flow - through said annular inlet (I) where it follows a varied path between facing ramps (Rc/32.2), the shape and arrangement of which are designed according to the viscosity and hardness of the liquefied polymeric material.

6. Device according to Claim 5, characterized in that said outer tube (31) carries a bush (32) which covers externally an adjacent portion of said inner die (22), in that said bush (32) has, by way of an extension of said outer tube (31), an external radial shoulder which has a double conicity, namely having a first section (32.1) in the form of a ramp conically flared towards said other end (10.32) of said tubular support body (10.3) and a following section (32.2) in the form of a ramp conically tapered towards said same other end (10.32) and connected with respect to the outer surface of said inner die (22), the zone of maximum external diameter (32.3) of said bush (32) being inserted, at a radial distance, inside said conveying ferrule (45), such as to provide in said inlet (I) an annular entrance of substantially small cross-section, through which the liquefied polymeric material is forced to penetrate.

7. Device according to Claims 4 to 6, for implementing the process according to Claims 1 and/or 2, characterized in that said first tubular die-carrying group (20), said other tubular die-carrying group (40), the respective inner die (22) and outer die (43), said conveying ferrule (45) and said bush (32) are arranged coaxially in said tubular support body (10.3), such as to provide for the liquefied polymeric material a varied axial extrusion path between several facing ramps (Re/Ri; Rc, 32.2) which are tapered and/or converging in the axial direction towards said drawing mouth (43.1), so as to convey uniformly the material itself, optimize the pressurized feeding thereof, direct with an axial thrust the progression thereof along the inner surface of the outer die in said extrusion passage (P) and obtain, in the drawing mouth, the extruded product in tubular form emerging under its own movement without the need for an internal male die.

8. Device for drawing with calibrated extrusion precision tubular linings made of rubber, plastic or the like according to Claim 7, for implementing the process according to Claim 3, wherein a calibrated passage (29), which is for example axial, is provided through said inner tube (21) and said inner die (22) for feeding, for example continuously, and the guide for tubular cores to be lined (A), which are for example axially aligned with respect to said extrusion passage (P), characterized in that, along said calibrated passage (29), there are provided pneumatic ducts/passages (21.3, 22.1, 22.3, grooves at 23) pneumatically connected in a sealed manner with respect to a vacuum device, for example a vacuum pump, and through which a continuous pneumatic vacuum is maintained in said calibrated passage (29), such as to cause continuous, for example axial, forward feeding through the passage itself of cores to be lined (A), at least as far as a point beyond said extrusion passage (P).

## Patentansprüche

1. Verfahren zum Ziehen mit kalibrierter Extrusionspräzision von Rohren und rohrförmigen Auskleidungen aus Gummi, Kunststoff u. dgl., wobei ein geschmolzener homogenisierter polymerer Werkstoff einer Ziehvorrichtung mit kalibrierter Extrusion (10) kontinuierlich unter Druck zugeführt, in mehrere Teilströme unterteilt, durch einen aus einer inneren und einer äusseren Matrize (22, 43) bestehenden ringförmigen Extrusions-Durchlass (P) zwangsweise gefördert, durch diesen Extrusions-Durchlass (P) in kalibrierter Rohrform extrudiert und dann durch eine anschliessende rohrförmige Ziehdüse (43.1) unter Nachbildung der inneren Flächenform derselben durch Eigenbewegung gezogen wird, dadurch gekennzeichnet, dass der geschmolzene homogenisierte polymere Werkstoff extrudiert wird, indem dieser durch den erwähnten Extrusions-Durchlass (P) hindurch über eine im wesentliche axiale Extrusionsstrecke, die durch entgegengesetzt liegende, verjüngte und/oder in axiale Richtung gegen die Ziehdüse (43.1) hin zusammenlaufende Rampen (Re/Ri) veranderlich verläuft, derart gefördert wird, dass der polymere Werkstoff gleichförmig und unter Optimierung der unter Druck erfolgenden Förderung vorbewegt und die Bewegung entlang der Innenfläche der äusseren Matrize durch den erwähnten Extrusions-Durchlass (P) durch axialen Schub derart geleitet wird, dass durch die Ziehdüse (43.1) der Ausfluss des extrudierten Teils in Rohrform durch Eigenbewegung und ohne Benötigung eines Innenkernes erfolgt.

2. Verfahren nach Anspruch 1, wonach der geschmolzene homogenisierte und in mehrere Teilströme unterteilte polymere Werkstoff - vor dem erwähnten Extrusions-Durchlass (P) mit Bezug auf die Strömungsrichtung - durch eine ringförmige Einmündung (I) zwangsweise gefördert wird, dadurch gekennzeichnet, dass die Teilströme des geschmolzenen homogenisierten polymeren Werkstoffs - vor der erwähnten Einmündung (I) mit Bezug auf die Strömungsrichtung - eine kegelförmig ausgesenkte Rampe (32.1) durchlaufen und über einen geringer bemessenen ringförmigen Eintritt in die erwähnte ringförmige Einmündung (I) einfliessen, wobei sie dann einem im wesentlichen axialen, zwischen mehreren verjüngten und/oder gegen den erwähnten ringförmigen Extrusions-Durchlass (P)hin in axiale Richtung zusammenlaufenden Rampen (Rc/32.2) veränderlichen Verlauf folgen.

3. Verfahren zum Ziehen mit kalibrierter Extrusionspräzision von rohrförmigen Auskleidungen aus Gummi, Kunststoff u. dgl. nach Anspruch 1 oder 2, bei dem auszukleidende rohrförmige Kerne (A) beispielsweise kontinuierlich durch einen Zufuhrdurchlass (29) der Vorrichtung (10) zugeführt werden, jeder Kern von einer Eintrittmündung (28) aus in Richtung auf die erwähnte Ziehdüse (43.1) geführt und wenigstens bis zum erwähnten Extrusions-Durchlass (P) vorgeschoben wird, wobei der unter Druck in kalibrierter Rohrform durch diesen Durchlass (P) extrudierte und infolge eigener Bewegung austretende polymere Werkstoff die innere Seitenfläche der Ziehdüse (43.1) nachbildet, zugleich jeden rohrförmigen Kern (A) gleichförmig umgibt und durch die Ziehdüse (43.1) und über diese hinaus mitnimmt, während das extrudierte Rohr diesem Kern eng angelegt wird, dadurch gekennzeichnet, dass der Vorschub eines jeden auszukleidenden Kernes (A) wenigstens bis zum erwähnten Extrusions-Durchlass (P) mittels im erwähnten Zufuhrdurchgang (29) wirkenden Unterdrucks erfolgt und anschliessend direkt der Extrusionsgeschwindigkeit der anliegenden rohrförmigen Auskleidung angepasst wird.

4. Vorrichtung zum Ziehen mit kalibrierter Extrusionspräzision von Rohren und rohrförmigen Auskleidungen aus Gummi, Kunststoff u.dgl. zur Durchführung des Verfahrens nach Anspruch 1, mit einem auf einem hin und her verschiebbaren Schlitten gelagerten Kopf (10.1), der beispielsweise mittels Schnellverbindungen an einem Extruder für geschmolzenen, homogenesierten polymeren Werkstoff befestigt ist, und mit einem rohrförmigen Lagerkörper (10.3), der im erwähnten Kopf (10.1) festgesetzt ist und eine darin gelagerte erste, feststehende und rohrförmigen Matrizenbacken-Einheit (20) trägt, die sich auf einer Teillänge des Lagerkörpers (10.3) im wesentlichen von einem Ende (10.33) desselben ausgehend erstreckt, sowie eine weitere feststehende rohrförmige Matrizenbacken-Einheit (40) trägt, die sich auf einer Teillänge des Lagerkörpers (10.3) im wesentlichen vom anderen Ende (10.52) desselben erstreckt, wobei die erwähnte erste rohrförmige Matrizenbacken-Einheit (20) eine festestehende, abgedichtet im Lagerkörper (10.3) gehaltene Aussenhülse (31) und eine in der Aussenhülse (31) gelagerte Innenhülse (21) umfasst, wobei zwischen der erwähnten Aussenhülse (31) und dem rohrförmigen Lagerkörper (10.3) eine Anordnung von Kanälen (31.3) vorgesehen ist, über die der geschmolzene, kontinuierlich unter Druck und durch eine Eintrittsleitung (10.7) zugeführte polymere Werkstoff in mehrere gegen das andere Ende (10.32) des ringförmigen Lagerkörpers (10.3) gerichtete Teilströme unterteilt wird, wobei die Innenhülse (21) an ihrem dem anderen Ende (10.32) des rohrförmigen Lagerkörpers (10.3) näheren Ende (21.1) eine rohrförmige Extrusionsmatrize (22), nachfolgend als innere Matrize bezeichnet, trägt und diese als Verlängerung der Innenhülse (21) dient, während die andere Matrizenbacken-Einheit (40) eine weitere ringförmige Extrusionsmatrize (43), nachfolgend als äussere Matrize bezeichnet, trägt und diese mit dem einen rohrförmigen Endbereich (43.1) sich wenigstens bis zum anderen Ende (10.32) des rohrförmigen Lagerkörpers (10.3) unter Ausbildung einer rohrförmigen Ziehdüse erstreckt, dadurch gekennzeichnet, dass der andere Endbereich (43.2) der äusseren Matrice (43) eine innere, gegen das Ende (10.33) des Lagerkörpers (10.3) trichtermässig offene Einsenkung aufweist, die durch mehrere aufeinandere folgende, kegelig und/oder zylindrisch ausgebildete Rampen (Re) mit unterschiedlichem Kegelwinkel und/oder unterschiedlichem Innendurchmesser gebildet ist, und dass in dieses eingesenkte Ende (43.2) der äusseren Matrize (43) das freie Ende (22.4) der inneren Matrize (22) berührungslos eindringt, während letztere aussen gegen das andere Ende (10.32) des Lagerkörpers (10.3) hin durch mehrere aufeinander folgende kegelige und/oder zylindrische Rampen (Ri) mit unterschiedlichem Kegelwinkel und/oder unterschiedlichem Aussendurchmesser derart verjüngt ausgebildet ist, dass zwischen beiden Extrusionsmatrizen (22, 43) ein ringförmiger Durchlass (P) zur kalibrierten Extrusion vorhanden ist, der einen unterschiedlich diskontinuierlichen und gegen die Ziehdüse (43.1) hin verjüngten Axialschnitt aufweist (Fig. 1) und durch den der polymere Werkstoff hindurchgepresst und in kalibrierter Rohrform extrudiert wird, indem der Werkstoff einem zwischen entgegengesetzt liegenden Rampen (Re/Ri) veränderlichen Extrusionsverlauf folgt, dessen Ausbildung und Anordnung abhängig von der Viskosität und Härte des polymeren Werkstoffs ausgelegt sind, wobei dann dieser durch die anschliessende rohrförmige Ziehdüse (43.1) durch Eigenbewegung austritt und dabei die Form der innenfläche der Düse nachbildet.

5. Vorrichtung nach Anspruch 4 zur Durchführung des Verfahrens nach Anspruch 2, mit einer im rohrförmigen Lagerkörper (10.3) befestigten und in Strömungsrichtung des polymeren Werkstoffs vor der äusseren Matrize (42) angeordneten Leitbüchse (45), die die innere Matrize (22) von aussen berührungslos und wenigstens teilweise umgibt, dadurch gekennzeichnet, dass die seitliche Innenfläche der Leitbüchse (45) nach Art eines gegen das erwähnte Ende (10.33) des rohrförmigen Lagerkörpers (10.3) mittels mehrerer aufeinander folgender, kegelig und/ oder zylindrisch ausgebildeter Rampen (Rc) mit unterschiedlichem Kegelwinkel und/oder unterschiedlichem Innendurchmesser derart eingesenkt ist, dass zwischen der Leitbüchse (45) und dem angrenzenden Teil der inneren Matrize (22) eine ringförmige Einmündung (I) gebildet ist, und diese - mit Bezug auf die Strömungsrichtung - zum Extrusions-Durchlass (P) hin ausläuft sowie einen diskontinuierlich unterschiedlichen Axialschnitt aufweist (Fig. 1), weswegen der in mehrere Teilströme unterteilte, geschmolzene und homogenisierte polymere Werkstoff in Strömungsrichtung vor dem erwähnten Extrusions-Durchlass (P) zwangsläufig durch die ringförmige Einmündung (I) hindurch gefördert wird und einem zwischen entgegengesetzt liegenden Rampen (Rc/32.2) veränderlichen Verlauf folgt, wobei Form und Anordnung der Rampen von der Viskosität und Härte des geschmolzenen polymeren Werkstoffs ausgelegt sind.

6. Vorrichtung nach Anspruch 5, dadurch gekennzeichnet, dass die erwähnte Aussenhülse (31) eine Büchse (32) abstützt, die einen angrenzenden Teil der innere Matrize (22) aussen abdeckt, dass diese Büchse (32) in Verlängerung der Aussenhülse (31) einen radialen Aussenansatz besitzt, der zweikegelig ausgebildet ist oder aber einen ersten Bereich(32.1)in Form einer gegen das andere Ende (10.32) des rohrförmigen Lagerkörpers (10.3) kegelig ausgesenkten Rampe und einen anschliessenden Bereich (32.2) in Form einer in Richtung gegen dasselbe andere Ende (10.32) hin verjüngten und an die Aussenfläche der inneren Matrize (22) anschliessenden Rampe, während der Bereich mit grösstem Aussendurchmesser (32.3) der Büchse (32) mit radialem Abstand in die Leithülse (45) derart eindringt, dass in der Einmündung (I) ein ringförmiger Eintritt mit erheblich geringertem Querschnitt zum zwangsweisen Hindurchfördern des geschmolzenen polymeren Werkstoffes ausgebildet ist.

7. Vorrichtung nach Anspruch 4 bis 6 zur Durchführung des Verfahrens gemäss Anspruch 1 und/oder 2, dadurch gekennzeichnet, dass die erste rohrförmige Matrizenbacken-Einheit (20), die zweite rohrförmige Matrizenbacken-Einheit (40), die zugehörigen innere Matrize (22) und äussere Matrize (43), die Leithülse (45) und die Büchse (32)derart koaxial im rohrförmigen Lagerkörper (10.3) angeordnet sind, dass für den geschmolzenen, polymeren Werkstoff ein zwischen mehreren entgegengesetzt liegenden, in Axialrichtung verjüngten und/oder gegen die Ziehdüse (43.1) hin zusammenlaufenden Rampen (Re/Rl; Rc, 32.2) axialer Extrusionsverlauf gebildet ist, wodurch der Werkstoff gleichförmig hindurchgeleitet wird in der Weise, dass die Förderung optimiert, die Strömung mit axialem Schub der Innenfläche der äusseren Matrize durch den Extrusions-Durchlass (P) geleitet und in der Ziehdüse der Ausfluss durch Eigenbewegung in Rohrform ohne Benötigung eines Innenkernes erreicht wird.

8. Vorrichtung zum Ziehen mit kalibrierter Extrusionspräzision von rohrförmigen Auskleidungen aus Gummi, Kunststoff u.dgl. nach Anspruch 7 zur Durchführung des Verfahrens nach Anspruch 3, mit einem kalibrierten, z.B. axialen Durchgang (29) zwischen dem Innenrohr (21) und der einneren Matrize (22) zum beispielsweise kontinuierlichen Fördern und Führen von auszukleidenden rohrförmigen Kernen (A), die beispielsweise axial fluchtend zum erwähnten Extrusions-Durchlass (P) zugeführt werden, dadurch gekennzeichnet, dass diesem kalibrierten Durchgang (29) entlang Kanäle / Leitungen (21.3, 22.1, 22.3, Nuten in 23) vorgesehen und mit einer Unterdruckvorrichtung, z.B. einer Vakuumpumpe, abgedichtet verbunden sind, wodurch im kalibrierten Durchgang (29) ein kontinuierlicher Unterdruck derart aufrecht gehalten wird, dass ein stetiger, beispielsweise axialer Vorschub von Kernen (A) durch diesen Durchgang wenigstens bis über den erwähnten Extrusiones-Durchlass (P) hinaus bewirkt wird.

## Revendications

1. Procédé d'étirage par extrusion calibrée de tubes et de revêtements tubulaires de précision en caoutchouc, en matière plastique et autres matières similaires, par lequel de la matière polymérique fondue et homogénéisée est alimentée en continu et sous pression dans un dispositif d'étirage par extrusion calibrée (10), est subdivisée en une pluralité de flux, est poussée à passer à travers un passage annulaire (P) d'extrusion, formé entre deux matrices d'extrusion (22, 43), l'une étant intérieure et l'autre étant extérieure, est extrudée à travers ledit passage (P) en forme tubulaire calibrée, et est ensuite étirée à travers une autre bouche tubulaire d'étirage (43.1) dont elle copie, en sortant simplement par son propre mouvement, la forme de la surface interne, caractérisé par le fait que la matière polymérique fondue et homogénéisée est extrudée en suivant, à travers ledit passage d'extrusion (P), un parcours d'extrusion substantiellement axial varié entre plusieurs rampes opposées (Re/Ri), réduites et/ou convergeant dans une direction axiale vers ladite bouche d'étirage (43.1), de façon à canaliser uniformément la matière même, à optimiser son alimentation sous pression, à diriger avec une poussée axiale sa progression le long de la surface interne de la matrice extérieure dans ledit passage d'extrusion (P) et à obtenir, dans la bouche d'étirage (43.1), la sortie de l'extrudé sous forme tubulaire par simple mouvement de celui-ci et sans besoin d'une pièce mâle intérieure.

2. Procédé selon la revendication 1, dans lequel la matière polymérique fondue et homogénéisée subdivisée en plusieurs flux est poussée à passer-en amont dudit passage d'extrusion (P), selon le sens de passage - à travers une embouchure annulaire (I), caractérisé par le fait que lesdits flux de matière polymérique et homogénéisée parcourent - en amont de ladite embouchure (I), selon le sens de passage - une rampe évasée d'un point de vue conique (32.1), pénètrent, à travers une entrée annulaire aux dimensions réduites, dans ladite embouchure annulaire (I), où ils suivent ensuite un parcours substantiellement axial varié entre plusieurs rampes opposées (Rc/32.2), réduites et/ou convergeant dans une direction axiale vers ledit passage annulaire d'extrusion (P).

3. Procédé d'étirage par extrusion calibrée de revêtements tubulaires de précision en caoutchouc, en matière plastique et autres matières similaires selon la revendication 1 ou 2, dans lequel des noyaux tubulaires (A) à revêtir sont alimentés, par exemple en continu, dans ledit dispositif (10) à travers un passage d'alimentation (29), dans lequel chaque noyau est guidé et poussé automatiquement pour avancer, à partir d'une bouche d'introduction (28) et vers ladite bouche d'étirage (43.1), au moins jusqu'audit passage d'extrusion (P), et où la matière polymérique extrudée sous pression en forme tubulaire calibrée à travers ledit passage d'extrusion (P) - alors qu'elle copie, en sortant simplement par son propre mouvement, la surface latérale interne de la bouche d'étirage (43.1) - enveloppe uniformément et entraîne, à travers et au-delà de ladite bouche d'étirage (43.1), chaque noyau tubulaire (A), auquel l'extrudé tubulaire même adhère intimement, caractérisé par le fait que la progression de chaque noyau à revêtir (A), au moins jusqu'audit passage d'extrusion (P), est réalisée par une action de dépression régnant dans ledit passage d'alimentation (29) et est, ensuite, reliée directement à la vitesse d'extrusion du revêtement tubulaire qui y adhère.

4. Dispositif d'étirage par extrusion calibrée de tubes et de revêtements tubulaires de précision en caoutchouc, en matière plastique et autres matières similaires, pour la mise en place du procédé selon la revendication 1, comprenant une tête (10.1), montée sur un chariot animé par un mouvement alterné et qui est, par exemple, fixée au moyen d'attaches rapides par rapport à un dispositif d'extrusion de matière polymérique fondue et homogénéisée, un corps tubulaire de support (10.3), fixé dans ladite tête (10.1) et portant, placés dans celui-ci, un premier groupe porte-matrice tubulaire (20), fixe et s'étendant sur une partie de la longueur dudit corps de support (10.3), substantiellement à partir d'une de ses extrémités (10.33), et un autre groupe portematrice tubulaire (40), fixe et s'étendant sur une partie de la longueur dudit corps de support (10.3), substantiellement à partir de son autre extrémité (10.32), dans lequel ledit premier groupe porte-matrice tubulaire (20) comprend un fourreau extérieur (31), fixe et juxtaposé de façon étanche dans ledit corps tubulaire de support (10.3) et un fourreau intérieur (21) monté dans ledit fourreau extérieur (31), dans lequel entre ledit fourreau extérieur (31) et ledit corps tubulaire de support (10.3) il est prévu de disposer des conduits (31.3), à travers lesquels la matière polymérique fondue, alimentée en continu et sous pression à partir d'un conduit d'introduction (10.7), est subdivisée en une pluralité de flux vers ladite autre extrémité (10.32) dudit corps tubulaire de support (10.3), dans lequel ledit fourreau intérieur (21) supporte, à son extrémité (21.1) proche de ladite autre extrémité (10.32) dudit corps tubulaire de support (10.3), une matrice tubulaire d'extrusion (22), appelée par la suite matrice intérieure, formant un prolongement dudit fourreau intérieur (21), dans lequel ledit autre groupe porte-matrice (40) supporte une autre matrice tubulaire d'extrusion (43), appelée par la suite matrice extérieure, laquelle tend avec une de ses zones d'extrémité tubulaire (43.1) au moins jusqu'à ladite autre extrémité (10.32) dudit corps tubulaire de support (10.3), formant une bouche tubulaire d'étirage, caractérisé par le fait que l'autre zone d'extrémité (43.2) de ladite matrice extérieure (43) présente une surface latérale interne évasée en guise d'entonnoir ouvert vers ladite extrémité (10.33) dudit corps de support (10.3) au moyen d'une pluralité de rampes successives (Re), coniques et/ou cylindriques, ayant une conicité différente et/ou différents diamètres intérieurs, et par le fait qu'entre ladite extrémité évasée (43.2) de ladite matrice extérieure (43) tend sans contact l'extrémité libre (22.4) de ladite matrice intérieure (22), laquelle est réduite à l'extérieur vers ladite autre extrémité (10.32) dudit corps tubulaire de support (10.3) au moyen d'une pluralité de rampes successives (Ri), coniques et/ou cylindriques, ayant des conicités différentes et/ou différents diamètres extérieurs, de façon à ce qu'entre lesdites deux matrices d'extrusion (22, 43) soit réalisé un passage annulaire (P) d'extrusion calibrée, lequel présente une section axiale (fig. 1) variée en discontinu et réduite vers ladite bouche d'étirage (43.1) et à travers lequel la matière polymérique est poussée à passer et est extrudée sous une forme tubulaire calibrée, en suivant un parcours d'extrusion varié entre des rampes opposées (Re/Ri), dont la forme et la disposition sont conçues en fonction de la viscosité et de la dureté de la matière polymérique, qui est ensuite étirée à travers la bouche tubulaire d'étirage suivante (43.1) dont elle copie, en sortant simplement par son propre mouvement, la forme de la surface interne.

5. Dispositif selon la revendication 4, pour la mise en place du procédé selon la revendication 2, comprenant une douille de canalisation (45) fixée dans ledit corps tubulaire de support (10.3) en amont, selon le sens de passage de la matière polymérique fondue, de ladite matrice extérieure (42) et laquelle enveloppe à l'extérieur, sans contact et au moins en partie, ladite matrice intérieure (22), caractérisé par le fait que la surface latérale interne de ladite douille de canalisation (45) est évasée de façon conique en guise d'entonnoir ouvert vers ladite extrémité (10.33) du corps tubulaire de support (10.3) au moyen d'une pluralité de rampes successives (Rc), coniques et/ou cylindriques, ayant une conicité différente et/ou différents diamètres intérieurs, de façon à ce qu'entre ladite douille de canalisation (45) et la partie adjacente de ladite matrice intérieure (22) est formée une embouchure annulaire (I), débouchant - selon ledit sens de passage - vers ledit passage d'extrusion (P) et ayant une section axiale (fig. 1) variée en discontinu, de façon à ce que la matière polymérique fondue et homogénéisée subdivisée en plusieurs flux est poussée à passer - en amont dudit passage d'extrusion (P), selon le sens de passage - à travers ladite embouchure annulaire (I), où elle suit un parcours varié entre des rampes opposées (Rc/32.2), dont les forme et disposition sont conçues en fonction de la viscosité et de la dureté de la matière polymérique fondue.

6. Dispositif selon la revendication 5, caractérisé par le fait que ledit fourreau extérieur (31) supporte une douille (32), laquelle recouvre à l'extérieur une portion contiguë de ladite matrice intérieure (22), par le fait que ladite douille (32) fournit, en prolongement dudit fourreau extérieur (31), une saillie radiale extérieure ayant une double conicité, en d'autres termes, présentant une première section (32.1) à rampe évasée de façon conique vers ladite autre extrémité (10.32) dudit corps tubulaire de support (10.3) et une deuxième section (32.2) à rampe réduite de façon conique vers ladite autre extrémité (10.32) et reliée par rapport à la surface extérieure de ladite matrice intérieure (22), la zone au plus grand diamètre extérieur (32.3) de ladite douille (32) étant introduite, avec une distance radiale, entre ladite douille de canalisation (45), de façon à réaliser dans ladite embouchure (I) une entrée annulaire d'une section sensiblement réduite, à travers laquelle le passage de la matière polymérique fondue est forcé.

7. Dispositif selon les revendications de 4 à 6, pour la mise en place du procédé selon les revendications 1 et/ou 2, caractérisé par le fait que ledit premier groupe porte-matrice tubulaire (20), ledit autre groupe porte-matrice tubulaire (40), les matrices intérieure (22) et extérieure (43) respectives, ladite douille de canalisation (45) et ladite douille (32) sont disposés de façon coaxiale dans ledit corps tubulaire de support (10.3) de façon à fournir à la matière polymérique fondue un parcours axial d'extrusion varié entre plusieurs rampes opposées (Re/Ri ; Rc, 32.2), réduites et/ou convergeant dans une direction axiale vers ladite bouche d'étirage (43.1) de façon à canaliser uniformément la matière même, à optimiser son alimentation sous pression, à diriger avec une poussée axiale sa progression le long de la surface interne de la matrice extérieure dans ledit passage d'extrusion (P) et à obtenir, dans la bouche d'étirage, la sortie de l'extrudé sous forme tubulaire par simple mouvement de celui-ci et sans besoin d'une pièce mâle intérieure.

8. Dispositif d'étirage par extrusion calibrée de revêtements tubulaires de précision en caoutchouc, en matière plastique et autres matières similaires selon la revendication 7, pour la mise en place du procédé selon la revendication 3, où un passage calibré (29), par exemple axial, est conçu à travers ledit fourreau intérieur (21) et ladite matrice intérieure (22) pour l'alimentation, par exemple en continu, et le guidage de noyaux tubulaires à revêtir (A), par exemple alignés de façon axiale par rapport audit passage d'extrusion (P), caractérisé par le fait que le long dudit passage calibré (29) sont pourvus des conduits/passages pneumatiques (21.3, 22.1, 22.3, des rainures en 23), reliés étanchement d'un point de vue pneumatique par rapport à un dispositif à vide, tel qu'une pompe à vide, et à travers lesquels une dépression pneumatique continue est maintenue dans ledit passage calibré (29), de façon à déterminer la progression continue, par exemple axiale, à travers le passage même, de noyaux à revêtir (A), au moins au-delà dudit passage d'extrusion (P).
